Europäisches Patentamt

European Patent Office

Office européen des brevets

(11) Veröffentlichungsnummer: **0 316 473**
**A1**

## (12) EUROPÄISCHE PATENTANMELDUNG

(21) Anmeldenummer: **87117011.4**

(22) Anmeldetag: **18.11.87**

(51) Int. Cl.⁴: **G02B 6/44 , G02B 6/38**

(43) Veröffentlichungstag der Anmeldung:
**24.05.89 Patentblatt 89/21**

(84) Benannte Vertragsstaaten:
**AT BE CH DE ES FR GB GR IT LI LU NL SE**

(71) Anmelder: **FIBRONIX Faseroptische Sensoren
+ Systeme GmbH
Werftstrasse 208
D-2300 Kiel(DE)**

(72) Erfinder: **Giese, Erhard Dr.
Drachenbahn 15
D-2300 Kiel 17(DE)**

(74) Vertreter: **Strasse, Joachim, Dipl.-Ing.
Strasse und Stoffregen European Patent
Attorneys Zweibrückenstrasse 17
D-8000 München 2(DE)**

(54) **Anordnung zum Haltern einer Glasfaser.**

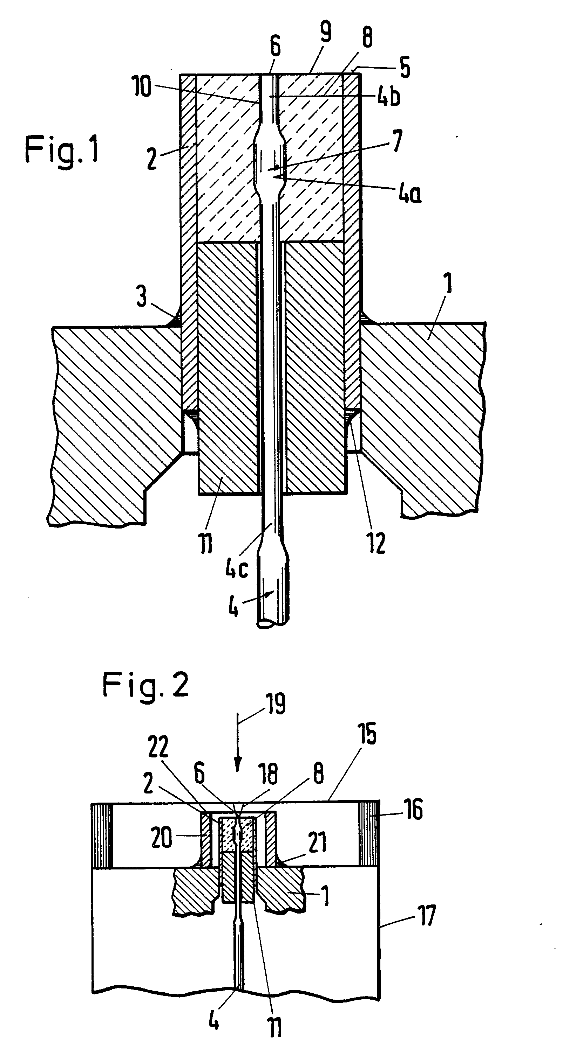

(57) Anordnung zum Haltern einer als Lichtleiter verwendbaren Glasfaser in einem Grundkörper (1) durch ein besonderes stabilisierendes Halte-Element (2,7) in Form einer Profilierung, einer Beschichtung, z.B. mit Gold, einer Befestigung in einem dünnwandigen Röhrchen und/oder mit einem umgebenden Rohr(Fig.1).

Fig.1

EP 0 316 473 A1

## Anordnung zum Haltern einer Glasfaser

Die Erfindung bezieht sich auf eine Anordnung zur Halterung einer als Lichtleiter verwendbaren Glasfaser an einem Grundkörper, insbesondere in einem faseroptischen Druckaufnehmer.

Insbesondere, wenn das aus der Glasfaser austretende Licht zu Meßzwecken Anwendung findet, ist es wichtig, daß die Position der Glasfaser, insbesondere ihrer Lichtaustritts-Vorderfläche, exakt festliegt da schon unbeabsichtigte Verschiebungen in der Größe von einem Mikrometer eine wesentliche Verfälschung des Ergebnisses, insbesondere einer Abstandsmessung, hervorrufen können. Die Gefahr einer Positionsänderung ist,vor allem dann groß, wenn im Betrieb ,insbesondere in achsialer Richtung, erhebliche Erschütterung und/oder hohe Temperaturen auftreten können.

Der Erfindung liegt die Aufgabe zugrunde, eine driftfreie Befestigung einer Glasfaser sicherzustellen, so daß etwaige ungewollte Verschiebungen kleiner als ein Mikrometer vorzugsweise kleiner als 1/10 Mikrometer bleiben. Da die Glasfaser herstellungsbedingt eine glatte Oberfläche besitzt, ist eine ausreichende Befestigung mit Klebstoffen oder anderen Adhäsionsstoffen nicht möglich. Dies ist insbesondere der Fall, wenn die Befestigungsstelle starken Temperaturänderungen ausgesetzt ist, da die großen Unterschiede im TemperaturAusdehnungs-Koeffizienten zwischen Quarz, aus dem die Faser besteht, und Metall, aus dem die anderen Apparateteile bestehen, zu Kriechbewegungen der Faser führen. Die Gefahr unkontrollierter Drifterscheinungen muß daher vermieden werden. Aber auch die Gefahr einer zu großen radialen Druckspannung ist zu vermeiden, die sich infolge von Ausdehnungsunterschieden der Faser und der Halterung ergeben können.

Eine handelsübliche Kunststoffbeschichtung der Faser ist typischerweise nur bis etwa 100°C dauerhaft beständig. Bei höheren Temperaturen ist die Faser nicht mehr ausreichend vor agressiven Gasen und vor OH-Ionen geschützt, da der Kunststoff brüchig wird oder sogar verbrennt.

Die Aufgabe einer stabilen Befestigung wird dadurch gelöst daß gemäß der Erfindung zwischen Glasfaser und Grundkörper ein stabilisierendes Halte-Element angeordnet ist.

Das Halte-Element kann vorzugsweise an der Oberfläche der Glasfaser oder an dem Grundkörper angebracht sein.

Mit einem stabilisierenden Halte-Element nach der Erfindung kann die unzureichende Befestigung mittels eines Klebstoffes od.dgl. überwunden und die sichere Position auch bei starken Belastungen durch Umgebungseinflüsse beibehalten werden.

Nach einer Ausführungsform der Erfindung wird das Halte-Element gebildet durch eine Profilierung der Oberfläche der Glasfaser, die in einer entsprechend profilierten Einbettung gehaltert wird. Auf diese Weise wird eine formschlüssige Verbindung erzielt.

Vorzugsweise kann die Faser in wenigstens einem kurzen Bereich eine Verdickung oder eine Verdünnung aufweisen. Dies läßt sich dadurch erreichen, daß die Glasfaser von ihrem ursprünglichen Durchmesser her entweder außerhalb des betreffenden Bereiches oder in dem betreffenden Bereich um einen Bruchteil ihrer Dicke abgeätzt wird. Die Verdickung bzw. Verdünnung erstreckt sich dabei in Längsrichtung der Glasfaser, vorzugsweise über das Zweifache bis Sechsfache der normalen Dicke der Glasfaser. Die Dickenabweichungen im Bereich der Verdickung bzw. Verdünnung können zweckmäßig etwa 10% bis 25% der normalen Dicke der Glasfaser betragen. Wenn die Glasfaser, wie üblich, einen runden Querschnitt aufweist, hat dieser Durchmesser an den betreffenden Stellen entsprechende Durchmesseränderungen. Zweckmäßig liegen im Bereich der Profilierung Bereiche allmählichen Überganges zwischen Bereichen verschiedener Dicke. So wird sichergestellt, daß an der Oberfläche keine ausgezeichneten Stellen entstehen, von denen Faserbrüche ausgehen können.

Nach einer anderen Ausführungsform der Erfindung kann das Halte-Element durch eine dünne Schicht aus in geringem Maße plastischem Material gebildet werden. Durch dieses Material wird einerseits eine Änderung des Durchmessers und damit eine äußere Profilierung bewirkt, und andererseits ist ein solches Material an Stellen hohen Druckes, z.B. an einer lokalen Spitze in der Oberfläche, nachgiebig genug, um verformt zu werden und so eine Druckübertragung ohne unzulässige lokale Spannungsspitzen im Glasfasermaterial zu ermöglichen.

Zweckmäßig besteht die dünne Schicht aus Feingold; sie kann dadurch erhalten werden, daß zunächst eine extrem dünne Goldschicht durch Aufdampfen erzeugt und so eine elektrische leitfähige Unterlage hergestellt wird, auf der dann galvanisch eine Verdickung in dem gewünschten Maße vorgenommen werden kann. Die Dicke der Schicht kann etwa 7 bis 15 $\mu$m, vorzugsweise etwa 10 $\mu$m, betragen. Die Länge der Schicht kann sich über das 5- bis 10-Fache, vorzugsweise etwa das 7-Fache, des normalen Durchmessers der Glasfaser erstrecken. Wenn z.B. die Dicke der Glasfaser 140 $\mu$m beträgt, kann die Schicht etwa 1 mm lang sein. Die Goldummantelung der Faser sollte auf die gesamte Faserlänge ausgedehnt sein, die Temperaturen über 100°C ausgesetzt ist.

Nach einer weiteren Ausführungsform der Erfindung kann am Grundkörper ein dünnwandiges Röhrchen befestigt sein, in dem die Glasfaser eingebettet ist. Dabei ist der Durchmesser des Röhrchens zweckmäßig 4 bis 10 mal, vorzugsweise etwa 7 mal so groß wie der normale Durchmesser der Glasfaser. Es ist vorteilhaft, wenn die Wandstärke des Röhrchens etwa gleich ist der Dicke der Glasfaser und z.B. 50 bis 150 μm vorzugsweise etwa 100 μm beträgt. Die freie Länge des Röhrchens über dem Grundkörper sollte zweckmäßig etwa 0,5 bis 2 mm betragen. Vorteilhafterweise wird dabei die Glasfaser in dem Röhrchen eingebettet mittels eines Materials, dessen Temperatur-Ausdehnungs-Koeffizient von dem der Glasfaser nur wenig abweicht.

Durch jede dieser Weiterbildungen der Erfindung, insbesondere durch ihre gemeinsame Anwendung, wird erreicht, daß einerseits infolge des vorzugsweise aus Metall bestehenden Röhrchens eine feste Verankerung am Grundkörper erreicht wird, daß aber andererseits Dickenänderungen der Glasfaser infolge von Temperaturschwankungen auf das Röhrchen übertragen werden, wobei lokale Spannungsspitzen in der Glasfaser nicht auftreten, so daß ein Brechen nicht zu befürchten ist.

Nach einer weiteren Ausführungsform ist die Glasfaser an ihrem Ende in gewissem Abstand umgeben von einem mit dem Grundkörper verbundenen Rohr, dessen Ende die Vorderfläche der Glasfaser nur wenig, z.B. 10 bis 30 μm, überragt. Wenn dann ein Gegenstand, z.B. eine Membran, sich dem Ende der Glasfaser zu starkt nähert, wird sie von dem Rohr aufgefangen, so daß sie die Glasfaser nicht berührt und deren Vorderfläche nicht zerstören kann.

Im folgenden wird der Gegenstand der Erfindung in den Zeichnungen erläutert. Es zeigt

Fig. 1 in einem vergrößerten Schnitt die Anordnung zur Halterung einer Glasfaser

Fig. 2 in einer Schnittdarstellung die Anwendung der Anordnung zur Halterung einer Glasfaser in einem faseroptischen Druckaufnehmer

Fig. 3 in einer Ansicht und teils im Schnitt einen faseroptischen Druckaufnehmer mit der Glasfaserhalterung,

Fig. 4 eine weitere Ausführungsform eines faseroptischen Druckaufnehmers, bei der für die Hinleitung und die Rückleitung des Lichtes der gleiche. Lichtleiter benutzt wird,

Fig. 5 eine zum Lichtleiter hin konkav gewölbte Membran und

Fig. 6 eine Membran mit Zonen unterschiedlicher Dicke zur Verbesserung der Kennlinie.

In einem Grundkörper 1 der z.B. zu einem Meßgerät oder einem anderen Apparat gehört, ist ein Röhrchen 2 fest angeordnet durch eine Naht 3, die z.B. durch Löten oder Schweißen erhalten wird. Im Zentrum des Röhrchens 2 ist eine Glasfaser 4 angeordnet, die sich bis zum oberen Ende 5 des Röhrchens 2 erstreckt und dort eine polierte Endfläche 6 aufweist. Etwa in der oberen Hälfte des Röhrchens 2 zeigt die Glasfaser 4 im Bereich 7 eine Verdickung 4a. Diese weist den gleichen Durchmesser von z.B. 140 μm auf wie die normale Glasfaser 4. Zwischen der Verdickung 7 und der Endfläche 6 einerseits und zwischen der Verdickung 7 und der normalen Glasfaser 4 andererseits ist die Dicke der Glasfaser vermindert, z.B. auf 125 μm, was z.B. durch Abätzen des Fasermaterials leicht erzielt werden kann.Diese in ihrer Dicke vermin derten Abschnitte sind bei 4b,4c angedeutet. Das Röhrchen 2 und die Verdickung 4a der Glasfaser 4 im Bereich 7 bilden zusammen das Halteelement für die Glasfaser.

Der Außendurchmesser des Röhrchens 2 beträgt etwa 1 mm, die Wandstärke 80 bis 100 μm. Der Raum zwischen der Innenwand des Röhrchens 2 und der Glasfaser 4 im Bereich der Verdickung 4a ist mit einem Einbettungsmaterial 8 ausgefüllt. Dieses kann z.B. aus einem Glaslot, Emaille oder Keramik bestehen. Ein solches Material soll zweckmäßig einen Temperatur-Ausdehnungs-Koeffizienten haben,der von der Glasfaser 4 nur wenig abweicht.

Dadurch kann sichergestellt werden, daß auch bei großen Temperaturänderungen keine starken Kräfte vom Einbettungsmaterial 8 auf die Glasfaser 4,4a,4b,4c ausgeübt werden. Das Material 8 kann auch durch ein Metall-Lot gebildet werden, zweckmäßig ein solches, das ausreichend plastisch ist, damit es beim Abkühlen und bei Temperaturwechsel keine unzulässigen Druck-Kräfte auf die Glasfaser 4,4a,4b,4c ausübt.

Wenn eine Glasfaser 4 mit ihrer glatten Oberfläche nach dem Stand der Technik in ein Material eingebettet wird, ist nicht sichergestellt, daß die Glasfaser tatsächlich fest gehalten wird. Insbesondere bei. Temperaturänderungen kann sich ein Spalt zwischen Glasfaser und Einbettungsmaterial bilden, so daß die Glasfaser sich in Längsrichtung verschieben kann. Durch dieses Driften befindet sich dann die Vorderfläche 6 der Glasfaser nicht mehr in einer ganz bestimmten Position zum Grundkörper 1, und z.B. Messungen, bei denen es auf den Abstand der Vorderfläche 6 von einem zu messenden Körper ankommt, werden ungenau. Durch die nach der Erfindung angebrachte Verdickung 4a wird jedoch eine Verschiebung der Glasfaser 4 in Längsrichtung sicher verhindert, so daß die Vorderfläche 6 der Glasfaser gegenüber der Vorderfläche 9 des Röhrchens 2 und des Einbettungsmaterials 8 unverrückbar festliegt und exakte Messungen ausgeführt werden können, weil unkontrollierte Kriechbewegungen der Glasfaser 4 sicher verhindert sind.

Die Glasfaser 4 ist nach einer anderen Ausbildung der Erfindung im Bereich des Einbettungsmaterials 8 mit einer Feingoldschicht 10 überzogen. Eine solche Schicht kann festhaftend auf der Glasfaser 4 angebracht werden, insbesondere dadurch, daß auf die von einem etwaigen Kunststoffüberzug freigelegte Glasfaseroberfläche zunächst eine leitende Schicht, z.B. eine Goldschicht, als Grundlage aufgedampft wird und daß diese Grundlage dann galvanisch auf z.B. 10 μm verstärkt wird. Diese Schicht kann dann, auch ohne eine Verdickung 4a der Glasfaser in dem Einbettungsmaterial 8 angebracht werden. Die durch die Goldschicht bewirkte Durchmesserveränderung wirkt ähnlich wie eine Verdickung 7. Das Gold bewirkt außerdem eine festere Oberflächenhaftung zwischen den Materialien, als das bei einer glatten Glasfaseroberfläche der Fall ist. Da diese Feingoldschicht einerseits sehr fest auf der Glasoberfläche haftet und andererseits sich etwaigen Unebenheiten, sei es von der Glasfaseroberfläche oder sei es vom Einbettungsmaterial, anpaßt, kann erreicht werden, daß nicht auf der Glasfaser im Bereich einer feinen Spitze ein überhöhter Druck auftritt, der zur Zerstörung führen könnte. Infolge der Goldschicht werden die von außen her, z.B. beim Erhitzen oder Abkühlen, auf die Glasfaser einwirkenden Kräfte gleichmäßig über die Glasfaseroberfläche verteilt, so daß die Glasfaser 4 sicher vor Zerstörung geschützt ist.

Besonders gute Ergebnisse werden erhalten, wenn diese Feingoldschicht 10 zusammen mit einer Verdickung 4a verwendet wird.

Es ist ersichtlich,daß statt einer Verdickung 4a auch eine, z.B. durch Abätzen erhaltene Verdünnung die erforderliche Stufung im Durchmesser erzielen läßt, durch die eine Verschiebung in axialer Richtung verhindert wird. Es können auch mehrere Verdickung und/oder Verdünnungen hintereinander angebracht werden. Ebenso ist es möglich, die dünne Schicht 10 selbst mit unterschiedlicher Dicke auszugestalten, sei es ringförmig um die Glasfaser 4 herum und/oder nach Art einer Rippe in Längsrichtung. Auch solche Verdickungen und/oder Verdünnungen in der Goldschicht , die dann gegebenenfalls etwas dicker ausgebildet sein könnte, wirken durch die dadurch erfolgende Profilierung der Oberfläche als Halte-Element zur sicheren Befestigung der Glasfaser.

Die Länge der Zone, in der eine solche Profilierung erfolgt, kann das 5- bis 10-Fache , vorzugsweise etwa das 7-Fache, des normalen Durchmessers der Glasfaser 4 betragen. So ist im Beispiel nach Fig. 1 die Dicke der Einbettungsschicht 8 in Längsrichtung des Röhrchens 2 etwa 1 mm. Die Länge der Verdickungszone 4a beträgt zweckmäßig das Zweifache bis Sechsfache der normalen Dicke der Glasfaser,beim Ausführungsbeispiel nach Fig. 1 etwa 250μm,wobei die Dickenabweichung etwa 10% bis 25% der normalen Dicke der Glasfaser beträgt. Zwischen der Verdickung 4a und dem anschließenden dünneren Teil der Glasfaser, also im Bereich der Profilierung, wird zweckmäßig ein Bereich allmählichen Überganges von der einen Dicke auf die andere Dicke vorgesehen, damit das die Glasfaser durchstrahlende Licht in seiner Strahlungsrichtung und gegebenenfalls Intensität möglichst wenig gestört wird.

Der Raum des Einbettungsmaterials 8 wird nach unten durch einen zylindrischen Körper 11 abgeschlossen,dessen Durchmesser nahezu dem Innendurchmesser des Röhrchens 2 entspricht und der in seinem Inneren eine Bohrung trägt, durch die die Glasfaser 4 mit der Verdickung 4a und gegebenenfalls einer aufgebrachten Feingoldschicht 10 hindurchgeschoben werden kann. Dieser Körper 11 ist mit dem Röhrchen 2 durch eine Naht 12, z.B. durch Löten oder durch Schweißen,verbunden. Durch den Körper 11 ist außerdem sichergestellt, daß das Röhrchen 2 im Grundkörper 1 mechanisch stabil angeordnet ist. Die Vorderfläche 9 des Einbettungsmaterials 8, des oberen Endes 5 des Rörchens 2 und die Glasfaser-Endfläche 6 können gemeinsam abgeschliffen und poliert und so auf ein definiertes Maß gebracht werden.

Eine Anordnung der Erfindung findet vorzugsweise dort Anwendung, wo vor der Vorderfläche 6 eine reflektierende Fläche angeordnet ist, die von dem aus der Glasfaser austretenden Licht bestrahlt wird. Fig. 2 zeigt schematisch die betreffenden Teile eines faseroptischen Sensors, wie er z.B. in der oben erwähnten älteren Patentanmeldung beschrieben wird.Im mittleren Teil von Fig.2 ist eine Anordnung entsprechend Fig. 1, etwa auf ein Viertel verkleinert, dargestellt.

Vor der Halterungsanordnung mit der Glasfaseroberfläche 6 ist in Fig. 2 in einem gewissen Abstand eine Membran 15 angebracht, die an ihrem Umfang über einen Ring 16 mit dem Gerät 17 verbunden ist, das den Grundkörper 1 enthält. Das über die Glasfaser 4 zugeführte Licht bei 18 wird an der Innenseite der Membran 15 reflektiert und vorzugsweise in die Glasfaser 4 zurückgespiegelt.Durch einen in nicht dargestellter Weise von außen auf die Membran einwirkenden Gas- oder Flüssigkeits-Druck - durch den Pfeil 19 angedeutet-wird die Membran 15 mehr oder weniger zur Vorderfläche 6 der Glasfaser 4 hin durchgebogen. Bei einem zu starken Druck könnte die Membran 15 die Vorderfläche 6 berühren und zerstören, so daß die weitere Funktion dieses faseroptischen Drukkaufnehmers gestört ist. Nach einer anderen Ausbildung der Erfindung ist daher das Röhrchen 2 mit der Glasfaser 6 in einem gewissen Abstand konzentrisch von einem Rohrstück 20 umgeben. Dieses ist an seinem unteren Ende durch eine Lötnaht 21 mit dem Grundkörper 1 fest verbunden, und ihr oberes Ende 22 überragt die Vorderfläche der Glasfaser 6 nur wenig, z.B. um 10 $\mu$m. Bei einem überstarken Druck kommt dann die Membran 15 auf dem vorderen Ende 22 des Rohres 20 zur Auflage und kann sich nicht weiter durchbiegen. Die Vorderfläche 6 der Glasfaser ist so sicher geschützt. Durch die verschiedenen Ausbildungen der Erfindung allein oder in Kombination kann somit die erforderliche betriebssichere Positionierung der Glasfaser 4, insbesondere ihrer Vorderfläche 6, sichergestellt werden.

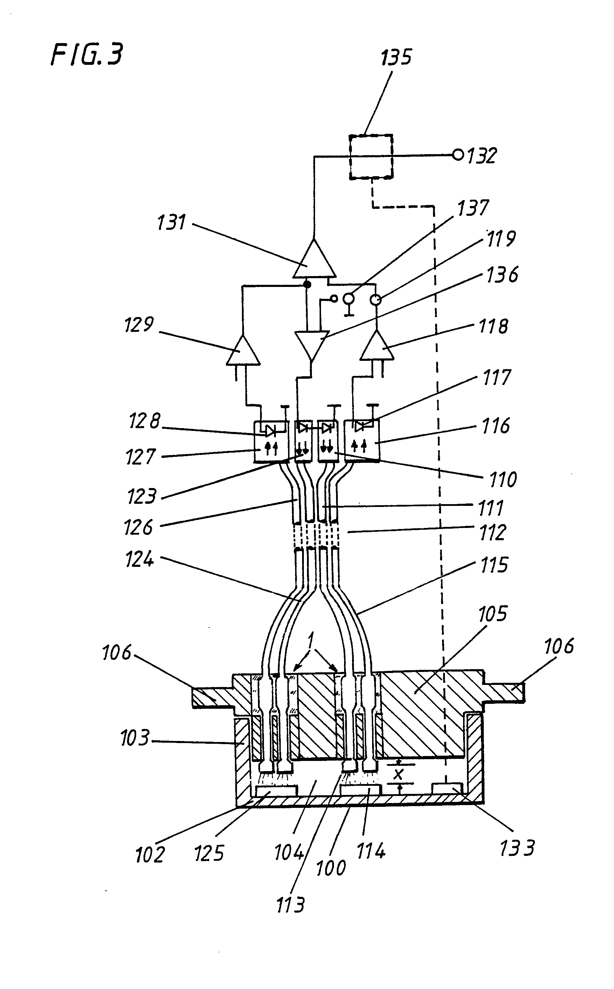

In Fig. 3 ist als bevorzugtes Ausführungsbeispiel ein faseroptischer Druckaufnehmer dargestellt, in dem die Glasfasern entsprechend der vorangehend beschriebenen Anordnung und Ausgestaltung gehalten sind. Bei diesem Druckaufnehmer ist eine Membran 101 einem Medium ausgesetzt, dessen Druck gemessen werden soll.

Die Membran 101, die vorzugsweise kreisrund ausgebildet ist, ist an ihrem Rand 102 in einem Haltering 103 gehalten. Durch die Membran 101 und den Haltering 103 wird eine Kammer 104 gebildet, die mit einem Verschlußstück 105, sozusagen mit einem Deckel, verschlossen ist. Das Verschlußstück 105 kann in beliebiger Weise an einer Armatur gehalten sein, z.B. mittels eines flanschartigen Ringes 106. Der Haltering 103 ist an dem Verschlußstück 105 befestigt, z.B. mittels eines Gewindes od.dgl.

Von einer Lichtquelle 110, z.B. einer Leuchtdiode, wird Lichtenergie einem Lichtleiter 111 zugeführt, der eine weitgehend beliebige Länge haben kann.

Das von einer Lichtquelle 110 eingestrahlte Licht wird in dem Lichtleiter 111 (Faser) von z.B. 100 bis 300 Mikrometer Faserdurchmesser weitergeführt und tritt am anderen Ende 113 aus. Über einen kurzen Abstand von z.B. 100$\mu$m trifft das Licht dann auf eine spiegelnde Oberfläche und wird dort reflektiert. Das reflektierte Licht wird zu einem Teil von einem zweiten Lichtleiter 115 (Faser) aufgenommen und an seinem anderen Ende einem weiteren Lichtempfänger 116, z.B. mit einer Fotodiode 117, aufgenommen. Dort wird die zugeführte Lichtintensität umgewandelt in eine elektrische Steuergröße, die dem Eingang eines Verstärkers 118 zugeführt wird. An einer mit dem Ausgang des Verstärkers 118 verbundenen Ausgangsklemme 119 trifft dann eine elektrische Steuergröße z.B. eine Spannung oder ein Strom auf, deren Größe in Abhängigkeit vom Abstand x zwischen der Austrittsfläche des Lichtleiters 115 und der spiegelnden Oberfläche 114 beeinflußt wird.

Nach einem bevorzugten Ausführungsbeispiel wird in Fig. 3 von einer Lichtquelle 123 über einen Hilfs-Lichtleiter 124 Faser) Licht einer in der Nähe des Randes 102 der Membran 101 angeordneten zweiten spiegelnden Fläche 125 zugeführt. Von der Fläche 125 reflektiertes Licht wird in einen anderen Hilfs-Lichtleiter 126 eingekoppelt und über diesen einem zweiten Lichtempfänger 127 zugeführt. In diesem wird mittels einer Fotodiode 128 ein elektrisches Signal gebildet, das der Intensität des Signals an der Austrittsstelle aus dem Lichtleiter 124 entspricht. Da sich der Spiegel 125 an dem Randteil der Membran 101 praktisch nicht bewegt, ist dieses Intensitätssignal vom Lichtempfänger 127 vom Meßdruck wenigstens nahezu unabhängig Wenn sich aber z.B. der Haltering 103 durch Temperatureinwirkungen ausdehnt, wird auch die Membran 101 von der unteren Fläche des Verschlußteiles 105 entfernt. Diese temperaturabhängige Veränderung wirkt sich voll auf die Intensität des im Lichtleiter 124 zurücklaufenden Lichtes aus. Das Ausgangssignal des Verstärkers 129 ist somit praktisch ausschließlich von der Temperatur im Meßkopf 101,102,103,105 abhängig und kann somit einer Auswerteeinrichtung zur Korrektur zugeführt werden.

Diese Auswerteeinrichtung besteht nach der im oberen Teil der Fig. 3 wiedergegebenen Schaltung aus einem Differenzverstärker 131, dessen anderem Eingang das durch Reflexion an der spiegelnden Fläche 114 in der Mitte der Membran erhaltene Signal von der Klemme 119 zugeführt wird.

Bei einem faseroptischen Druckaufnehmer der in Rede stehenden Art beträgt die Intensität $1_E$ des dem Strahlungsempfänger 116,117 zugeführten Lichtes

$$1_E = (l_Q \cdot D - m \cdot x) s \cdot D$$

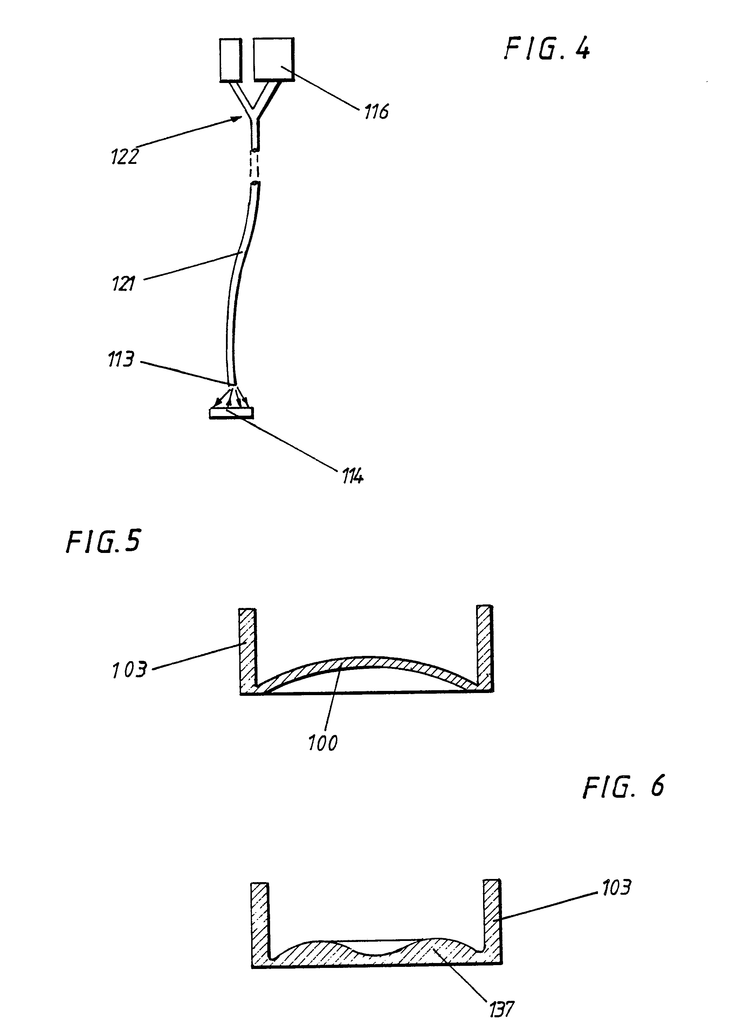

Dabei ist $_Q$ die Intensität des von der Lichtquelle 110 dem Lichtleiter 111 zugestrahlten Lichtes; D ist der Dämpfungsfaktor im Lichtleiter S bedeutet den Reflexionsfaktor bei Spiegelung am Spiegel 114, x ist der in Fig. 4 angedeutete Abstand zwischen den Enden der Lichtleiter 111,115 und der spiegelnden Fläche 114. m bedeutet die Steilheit der Einwirkung der Verschiebung auf die Intensität des zurückgeleiteten Lichtes.

Mit $a = m/l_Q \cdot D$ wird erhalten

$$I_E = I_Q \cdot S \cdot D^2 (1 - a.x), \text{ wobei}$$

$$a = \frac{m}{I_Q \cdot D}$$

ist.

Wenn die Verschiebung x in einen von der Temperatur T abhängigen Teil und einen vom Druck P abhängigen Teil aufgeteilt wird, so werden in den Empfängern 116 bzw. 127 Lichtintensitäten $I_{EM}$ bzw. $I_{ER}$ erhalten.

$$I_{EM} = I_Q \cdot S \cdot D^2 \, ( 1 - ax_{TM} - ax_{PM})$$

$$I_{ER} = I_Q \cdot S \cdot D^2 \, ( 1 - ax_{TR} - ax_{PR})$$

Die von temperaturbedingten Verformungen abhängigen Verschiebungen $x_{TM}$ und $x_{TR}$ sind gleich. Wenn die Differenz zwischen den beiden Intensitäten bzw. ihnen entsprechenden elektrischen Signalen gebildet wird, dann wird

$$I = I_{EM} - I_{ER}$$

$$\Delta = I_Q \cdot S \cdot D^2 a( x_{PR} - x_{PM}) \, , \, x_{TM} = x_{TR}$$

erhalten.

Das Ergebnis ist somit von der Temperatur unabhängig und ergibt einen Meßwert für den Druck.

Demgemäß wird in Fig. 3 zwischen den Ausgangssignalen der Verstärker 118 und 129 in einem als Auswerteeinheit wirksamen Differenzverstärker 131 das Differenzsignal gebildet und kann dem Ausgang 132 entnommen werden.

Es besteht auch die Möglichkeit, einen separaten Temperaturfühler 133 an dem Rande der Membran 101, gegebenenfalls auch am Haltering 103, anzuordnen, der ein z.B. elektrisches Signal an eine Leitung 134 abgibt. Das Ausgangssignal von der Klemme 119 kann zur Ausgangsklemme 132 über eine Ausgleicheinrichtung 135 geführt werden, in der mit dem von der Leitung 134 her zugeführten Temperatursignal die erforderliche Temperaturkorrektur vorgenommen wird.

Das vom Verstärker 129 her zugeführte Meßsignal kann auch einem Differenzverstärker 136 zugeführt werden, dessen anderem Eingang ein Vergleichssignal 137 zugeführt wird. Mit dem Differenzverstärker 136 kann dann erreicht werden, daß die Amplitude des Ausgangssignals des Verstärkers 129 auf einen durch das Vergleichssignal 137 gegebenen konstanten Wert geregelt wird. Falls im Betrieb die Lichtleitungen in ihrer Lage stark verändert werden, derart, daß die Dämpfung D sich ändert, kann durch diese Nachregelung die Stärke der Lichtquelle 110 und 123 nachgeführt werden, derart, daß die Amplitude am Verstärker 129 praktisch konstant bleibt. Die mit dem optischen Meßsystem 111,114,115 erzielte Umsetzung eines Druckes in einen dazu proportionalen elektrischen Wert, insbesondere eine Ausgangs-Spannung, ist in der Regel keine streng lineare Funktion. Nach einer weiteren Ausführungsform kann dazu eine Linearisierung durchgeführt werden. Der Ausgangswert vom Verstärker 131 wird in der Ausgleicheinrichtung zunächst in einen Digitalwert umgewandelt (A/D - Wandler). Dieser Digitalwert kann gleichzeitig als Adresse für einen Tabellen-Speicher dienen, in dem für jeden Meßwert der richtige, d.h. korrigierte, Druckwert enthalten ist und der über einen D/A-Wandler dem Ausgang 132 zugeführt werden kann. Dort steht dann der linearisierte Druckwert in analoger Form zur Verfügung.

Fig. 5 zeigt eine Ausführungsform, bei der die Membran 1 entsprechend einer Kugelkalotte gebogen ist. Dadurch kann ebenfalls eine Verbesserung der Kennlinie erreicht werden.

Fig. 6 zeigt eine Ausführungsform, bei der eine Membran 137 unterschiedlicher Dicke verwendet wird. Dabei läßt sich ebenfalls eine Verbesserung der Kennlinie und/oder gegebenenfalls des Temperaturverhaltens erreichen. Die Membran 137 soll dabei zweckmäßig zusammen mit dem Halter 103 als zylindrisches Drehteil hergestellt werden, damit sich im Bereich mechanischer Belastung bzw. Schwingungen keine Schweiß- oder Fügestellen befinden.

Als Membranwerkstoff kann eine hochwärmefeste Metalllegierung dienen, die sich durch geringe Alterungserscheinungen und eine sehr hohe Dehnungsgrenze auszeichnet, so daß ein großer Meßbereich erhalten werden kann und eine hohe Rückstellgenauigkeit der Membran über die gesamte Lebensdauer hinweg erzielt wird.

Mit einem Druckaufnehmer gemäß Fig. 3 kann auch eine hohe Nullpunktstabilität erzielt werden,insbesondere dadurch, daß die durch Reflexion im Randbereich 125 im Lichtempfänger 127 erhaltene Lichtintensität durch den Differenzverstärker 136 mit einem Soll-Wert $U_s$ einer Quelle 137 verglichen und durch Nachsteuerung der Lichtquellen 110 und 123 konstant gehalten wird, wobei durch die Nachsteuerung erreicht wird, daß Änderungen der Kabeldämpfung, Temperaturfehler und Reflexionsänderungen kompensiert werden. Zu diesem Zweck müssen beide Fasern möglichst gleichbehandelt sein, d.h. in einem gemeinsamen Führungsschlauch liegen. Dadurch werden sowohl temperaturbedingte Abweichungen als auch Abweichungen des Dämpfungsfaktors in den Lichtleitern und des Reflexionsfaktors am Spiegel 125 ausgeregelt. Wenn die Spiegel 125 und 114 von gleicher Art sind, heißt das auch, daß Änderungen des Reflexionsfaktors des Spiegels 114 vom Meßergebnis ferngehalten werden.

Eine Korrektur der Kennlinie ist auch dadurch möglich, daß die Spiegelfläche selbst konvex oder konkav gekrümmt wird. Dadurch kann der Rückstrahlung ein gegenüber einem ebenen Spiegel anderer Zusammenhang gegeben und die Kennlinie der im Lichtempfänger festgestellten Intensität im Verhältnis zur Membranverschiebung verändert werden. Aus dem Lichtleiter 111 bzw. 124 von der Lichtquelle 110 bzw. 123 zum Spiegel 114 bzw.

125 hin wird unter einem gewissen Öffnungswinkel von z.B. 70° ausgestrahlt. Dieses Licht kann durch einen gekrümmten Spiegel dann entweder mehr fokussiert oder mehr zerstreut werden, wodurch sich eine entsprechende Beeinflussung der Kennlinie ergibt. Als Lichtquelle in dem Lichtsender 110 bzw. 123 können Licht-Emissions-Dioden (LEB'S) verwendet werden, aber auch Laser-Dioden ,die ggfs. eine größere Lichtintensität für Übertragung über lange Lichtleiterstrecken und/oder eine bessere Regelmöglichkeit bieten. Als Laser-Diode ist dabei ein Multimode-Laser mit kurzer Kohärenzlänge besonders geeignet, da sonst dem optischen Ausgangssignal störende Lichtinterferenzen überlagert sein können.

Die Glasfaser für den Druckaufnehmer soll eine möglichst große numerische Apertur (NA) aufweisen, damit die durch Kabelbiegungen hervorgerufene Dämpfung möglichst kleine Werte annimmt. Eine große numerische Apertur verlangt eine große Brechungsindex-Differenz zwischen Kern- und Mantelmaterial der Glasfaser. Diese Differenz ist dazu geeignet, auch Lichtausbreitungs-Moden mit einem stumpfen Einfallswinkel auf die Grenzschicht verlustfrei zu reflektieren, so daß relativ kleine Biegeradien mit geringer Dämpfung möglich werden.

Bekannte Lichtleiter für nachrichtentechnische Zwecke haben demgegenüber eine relativ kleine numerische Apertur, die sie für die Verwendung in einem Druckaufnehmer nach der Erfindung wenig geeignet machen.

Lichtleiter für Aufnehmer nach der Erfindung sollen eine hochtemperaturfeste Beschichtung (primäre Faserschutzbeschichtung) besitzen. Diese kann beispielsweise in Form einer aufgedampften Schicht aus Metall od. dgl. z.B. aus Aluminium oder Titancarbid ausgeführt sein. Handelsübliche Glasfasern sind normalerweise nur bis zu einer Temperatur von maximal 125°C einsetzbar, da die Faserschutzbeschichtung oberhalb dieser Temperatur zerstört wird.

Für die Hinleitung des Lichtes von der Lichtquelle und die Rückleitung des reflektierten Lichtes zum Lichtempfänger kann über den größten Teil seiner Länge der gleiche Lichtleiter 121 ausgenutzt werden. Dann ist lediglich hinter der Lichtquelle 110 bzw. vor dem Lichtempfänger 116 ein nicht näher dargestellter weiterer Lichtteiler 122 anzubringen, der das zurückkehrende Licht von dem ausgesandten Licht trennt.

## Ansprüche

1. Anordnung zur Halterung einer als Lichtleiter verwendbaren Glasfaser an einem Grundkörper, insbesondere in einem faseroptischen Druckaufnehmer, dadurch gekennzeichnet, daß zwischen Glasfaser (4) und Grundkörper (1) ein stabilisierendes Halte-Element (2,7) angeordnet ist.

2. Anordnung nach Anspruch 1, dadurch gekennzeichnet, daß das Halteelement (2,7) vor der Halterung an der Oberfläche der Glasfaser (4) angebracht ist.

3. Anordnung nach Anspruch 1, dadurch gekennzeichnet, daß das Halte-Element getrennt von der Glasfaser am Grundkörper angebracht ist.

4. Anordnung nach Anspruch 1 und 2, dadurch gekennzeichnet, daß das Halte-Element durch eine Profilierung (7;4a) der Oberfläche der Glasfaser (4) gebildet wird, die in einer entsprechend profilierten Einbettung (8) gehalten wird.

5. Anordnung nach Anspruch 4, dadurch gekennzeichnet, daß die Glasfaser (4) in wenigstens einem kurzen Bereich eine Verdickung (4a) aufweist.

6. Anordnung nach Anspruch 4, dadurch gekennzeichnet, daß die Glasfaser (4) in wenigstens einem kurzen Bereich eine Verdünnung aufweist.

7. Anordnung nach Anspruch 5 oder 6, dadurch gekennzeichnet, daß die Verdickung (4a) bzw.Verdünnung sich in Längsrichtung der Glasfaser (4) über das Zweifache bis Sechsfache der normalen Dicke der Glasfaser erstreckt.

8. Anordnung nach Anspruch 5, 6 oder 7, dadurch gekennzeichnet, daß die Dickenabweichung der Glasfaser (4) im Bereich der Verdickung (4a) bzw. Verdünnung etwa 10% bis 25% der normalen Dicke der Glasfaser (4) beträgt.

9. Anordnung nach einem der Ansprüche 4 bis 8, dadurch gekennzeichnet, daß bei der Profilierung zwischen Bereichen unterschiedlicher Dicke der Glasfaser (4) Bereiche allmählichen Überganges liegen.

10. Anordnung nach Anspruch 1 und 2, dadurch gekennzeichnet, daß das Halte-Element durch eine dünne Schicht (10) aus in geringem Maße plastischem Material gebildet wird.

11. Anordnung nach Anspruch 10, dadurch gekennzeichnet, daß die Dicke der Schicht (10) etwa 7 bis 15 μm vorzugsweise etwa 10 μm, beträgt.

12. Anordnung nach Anspruch 10 oder 11, dadurch gekennzeichnet, ·daß die Länge der Schicht (10) das 5-bis 10-Fache, vorzugsweise etwa das 7-Fache, des normalen Durchmessers der Glasfaser beträgt.

14. Anordnung nach einem der Ansprüche 10 bis 13, dadurch gekennzeichnet, daß die Schicht (10) durch Aufbringen, z.B. Aufdampfen, einer leitenden Grundschicht und anschließende galvanische Verstärkung angebracht ist.

15. Anordnung nach Anspruch 1 oder 3, dadurch gekennzeichnet, daß am Grundkörper (1) ein dünnwandiges Röhrchen (2) befestigt ist, in dem die Glasfaser (4) eingebettet ist.

16. Anordnung nach Anspruch 15, dadurch gekennzeichnet, daß der Durchmesser des Röhrchens (2) etwa 4 bis 10 mal, vorzugsweise etwa 7mal, so groß ist wie der normale Durchmesser der Glasfaser (4).

17. Anordnung nach Anspruch 15 oder 16 dadurch gekennzeichnet, daß die Wandstärke des Röhrchens (2) etwa gleich ist der Dicke der Glasfaser (4).

18. Anordnung nach Anspruch 15,16 oder 17, dadurch gekennzeichnet, daß die Wandstärke des Röhrchens (2) etwa 50 bis 150 $\mu$m, vorzugsweise etwa 100 $\mu$m, beträgt.

19. Anordnung nach einem der Ansprüche 15 bis 18, dadurch gekennzeichnet, daß die freie Länge des Röhrchens (2) über dem Grundkörper (1) etwa 0,5 bis 2 mm beträgt.

20. Anordnung nach einem der Ansprüche 15 bis 19, dadurch gekennzeichnet, daß die Glasfaser (4) in dem Röhrchen (2) eingebettet ist mittels eines Materials (8), dessen Temperatur-Ausdehnungs-Koeffizient von dem der Glasfaser (4) nur wenig abweicht.

21. Anordnung nach einem der Ansprüche 1 und 3, dadurch gekennzeichnet, daß die Glasfaser (4) an ihrem Ende in gewissem Abstand etwa konzentrisch umgeben ist von einem mit dem Grundkörper (1) verbundenen Rohr (20), dessen Ende die Vorderfläche der Glasfaser (4) nur wenig, z.B. 10 bis 30 $\mu$m, überragt.

Fig.1

Fig.2

FIG.3

FIG. 4

116

122

121

113

114

FIG. 5

103

100

FIG. 6

103

137

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-4 296 996  (Y. NIIRO et al.) <br> * Spalte 1, Zeilen 52-69; Spalte 2, Zeilen 19-40; Spalte 2, Zeile 66 - Spalte 4, Zeile 36; Figuren * <br> --- | 1,2,4,5 ,7,8,11 -14 | G 02 B 6/44 <br> G 02 B 6/38 |
| A | GB-A-2 119 538  (STANDARD TELEPHONES AND CABLES PLC) <br> * Abbildung 1 * <br> --- | 15-17 | |
| A | US-A-4 682 846  (COWEN) <br> ----- | | |

RECHERCHIERTE SACHGEBIETE (Int. Cl.4)

G 02 B 6/00

Der vorliegende Recherchenbericht wurde für alle Patentansprüche erstellt

| Recherchenort | Abschlußdatum der Recherche | Prüfer |
|---|---|---|
| BERLIN | 24-06-1988 | KEMSLEY E.E.K. |